# EUROPÄISCHE PATENTSCHRIFT

(11) **EP 1 111 251 B1**
(45) Veröffentlichungstag und Bekanntmachung des Hinweises auf die Patenterteilung: **18.02.2004**
(21) Anmeldenummer: 00124383.1
(22) Anmeldetag: 21.11.2000
(51) Int. Cl.: F16B 5/02, F16B 5/08, B60J 5/04, E05D 5/02

(54) **Anordnung zur Befestigung eines Gegenstandes an einem Hohlkörper**
Device for fixing a component to a hollow structure
Dispositif de fixation d'un objet sur un corps creux

(30) Priorität: 03.12.1999 DE 19958148
(43) Veröffentlichungstag der Anmeldung: 27.06.2001
(73) Patentinhaber: Volkswagen Aktiengesellschaft, 38436 Wolfsburg (DE)
(72) Erfinder: Krauth, Werner, 38162 Cremlingen (DE); Welsch, Frank, Dr., 38179 Schwülper (DE); Seel, Werner, 38542 Leiferde (DE)

(56) Entgegenhaltungen:
- EP-A- 0 390 751
- EP-A- 0 425 919
- EP-A- 1 103 730
- DE-A- 19 815 407
- US-A- 5 624 150

## Beschreibung

Die Erfindung betrifft eine Anordnung zur Befestigung eines Gegenstandes an der Außenwand eines Hohlkörpers.

Derartige Befestigungsanordnungen werden beispielsweise im Automobilbau dazu verwendet, um ein Scharnier für eine Fahrzeugtür an einem Türholm eines Fahrzeugaufbaus zu befestigen. Aus Gründen der Kraftstoffeinsparung wird eine möglichst leichtgewichtige Konstruktion angestrebt. So ist insbesondere der Karosseriebau durch die Verwendung möglichst dünner Bleche gekennzeichnet. Schwere Bauteile können an diesen jedoch nicht ohne weiteres befestigt werden, da dies zur Rißbildung an den Befestigungsstellen führen würde. Zu einer sicheren Verankerung eines Scharniers für einen schweren Gegenstand wie eine Fahrzeugtür muß daher die Karosserie verstärkt werden. Dabei ist weiterhin zu berücksichtigen, daß die Fahrzeugtür auch bei einem Unfall nicht aus ihrer Verankerung gerissen werden darf.

Eine verhältnismäßig stabile Befestigung könnte beispielsweise durch eine großflächige Ankopplung des karosserieseitigen Abschnittes des Scharniers erfolgen. Dies ist jedoch im Hinblick auf eine Lackierung des Fahrzeuges sowie aus ästhetischen Gründen nicht wünschenswert.

Aus dem Stand der Technik, beispielsweise der DE 39 36 376 C1, ist weiterhin bekannt, im Bereich der Ankopplung des Scharniers ein Distanzstück zwischen den Innenwänden eines hohlen Abschnittes der Fahrzeugkarosserie einzusetzen und an der dem Scharnier gegenüberliegenden Innenwand anzuschweißen. Das Distanzstück ist weiterhin mit einem Innengewinde versehen, über das ein Sockel des Scharniers an einer Außenwand des hohlen Abschnittes befestigt werden kann. Die aus der DE 39 36 376 C1 bekannte Befestigungsanordnung ist jedoch herstellungstechnisch aufwendig, da das Distanzstück vor dem Zusammenfügen der den hohlen Abschnitt bildenden Bleche an eines dieser Bleche innenseitig angeschweißt werden muß. Überdies kann eine solche Befestigungsanordnung für geschlossene Profilelemente nicht verwendet werden.

Der Erfindung liegt demgegenüber die Aufgabe zugrunde, eine Befestigungsanordnung für die Ankopplung eines Gegenstandes an der Außenwand eines Hohlkörpers zu schaffen, die eine hohe Festigkeit aufweist und einfach herstellbar ist.

Diese Aufgabe wird gelöst durch eine Anordnung zur Befestigung eines Gegenstandes an der Außenwand eines Hohlkörpers, umfassend einen Hohlkörperabschnitt mit zwei einander gegenüberliegenden Wänden, die mit zueinander orientierten Öffnungen versehen sind, und einen Befestigungsbolzen, der auf der Seite der einen Öffnung innenseitig axial abgestützt ist und einen durch diese Öffnung nach außen ragenden Befestigungsabschnitt zur Kopplung mit dem Gegenstand aufweist, und der an der anderen Öffnung, die als Einführöffnung für den Befestigungsbolzen ausgebildet ist, dauerhaft mit dem Hohlkörper verbunden ist.

Die erfindungsgemäße Lösung zeichnet sich durch eine gleichmäßige Krafteinleitung in den Hohlkörper aus, so daß dessen Wände ohne Verluste bei der Festigkeit der Anordnung aus dünnen Blechen gefertigt werden können. Da die Anbringung des Befestigungsbolzens an dem bereits fertigen Hohlkörper, beispielsweise einer A-Säule oder B-Säule eines Kraftfahrzeuges, erfolgen kann, ist es möglich, den herstellungstechnischen Aufwand zu verringern. Bei einer Serienfertigung einer Fahrzeugkarosserie kann dieser Schritt ohne Mehraufwand bei der Anbringung der Fahrzeugtüren vorgenommen werden. Die dauerhafte Ankopplung weist im Gegensatz zu lösbaren Verbindungen eine besonders hohe Resistenz gegen Schwingungsanregungen auf.

Vorzugsweise ist der Befestigungsbolzen auf der Seite der Einführöffnung an dem Hohlkörper angeschweißt. Dies ist insbesondere bei einer Verwendung der Anordnung in der Serienfertigung von Fahrzeugkarosserien vorteilhaft, da die entsprechenden Fertigungsmittel hierzu ohnehin vorhanden sind. Die Schweißverbindung erlaubt überdies eine besonders raumsparende Lösung und erweist sich im Vergleich zu zusätzlichen Befestigungsmitteln insbesondere im Hinblick auf ein geringes Gewicht als besonders günstig. Zudem kann die Schweißverbindung lackiert werden, ohne daß die Gefahr von Rissen besteht.

In einer alternativen Ausführungsform ist der Befestigungsbolzen an dem Hohlkörper auf der Seite der Einführöffnung angelötet. Diese ist bei schwer schweißbaren Werkstoffen oder besonders dünnen Bleche zu bevorzugen.

Ein optisch ansprechendes Erscheinungsbild bzw. ein geringer Aufwand an Nachbearbeitungsmaßnahmen ergibt sich vorzugsweise dann, wenn der Befestigungsbolzen im eingesteckten Zustand mit einem Außenwandabschnitt des Hohlkörpers um die Einführöffnung bündig abschließt.

In einer weiteren, vorteilhaften Ausgestaltung der Erfindung ist ein die Einführöffnung umgebender Rand des Hohlkörperabschnittes nach innen derart umgebogen, daß zwischen dem Rand und dem Außenumfang des Befestigungsbolzens ein Ringspalt gebildet wird, wobei die dauerhafte Verbindung zwischen dem Befestigungsbolzen und dem Hohlkörper im wesentlichen zwischen einer Innenumfangsfläche des umgebogenen Randes und einer Außenumfangsfläche des Befestigungsbolzen vorgenommen ist. Damit läßt sich auch bei einer geringen Dicke des Wandabschnittes um die Einführöffnung eine stabile Abstützung an demselben verwirklichen.

Vorzugsweise ist der Befestigungsbolzen einstückig ausgebildet, so daß die Anzahl der Bauteile der Anordnung gering gehalten werden kann.

In einer weiteren, vorteilhaften Ausgestaltung wird der Befestigungsbolzen durch einen Schraubbolzen und einen an dessen Kopf befestigte Verlängerungshülse gebildet. Dies ermöglicht die Verwendung von Normteilen zumindest im Hinblick auf den Schraubbolzen. Durch die Ausführung des Verlängerungsstückes als Hülse ergibt sich eine weitere Gewichtsersparnis. Überdies erlaubt die Hohlform die Verwendung eines Schraubbolzens mit einer Innensechskantausnehmung, so daß der Befestigungsbolzen mit herkömmlichen Werkzeugen einfach mit dem zu befestigenden Gegenstand verbunden werden kann.

Ein zusätzlicher Versteifungseffekt an der Wand des Hohlkörpers, an der der Gegenstand angeschlossen wird, ergibt sich in einer bevorzugten Ausgestaltung dann, wenn die Axialabstützung des Befestigungsbolzens gegen einen Innenwandabschnitt des Hohlkörpers auf der Seite der Befestigung des Gegenstandes über eine Verstärkungsplatte erfolgt, die gegen den Innenwandabschnitt flächig anliegt und mit einer Durchgangsöffnung für den Befestigungsabschnitt des Befestigungsbolzens versehen ist. Hierdurch können auch schwere Gegenstände an besonders dünnwandige Hohlkörper angeschlossen werden.

Vorzugsweise ist der Befestigungsabschnitt des Befestigungsbolzens als Gewindebolzen mit einem Außengewinde ausgebildet. Dieser Befestigungsabschnitt kann damit einfach in ein entsprechendes Gewinde an dem anzubringenden Gegenstand eingeschraubt werden, ohne daß weitere Befestigungsmittel, die bei der Montage verloren gehen könnten, erforderlich wären. Daneben bleibt die Anzahl der erforderlichen Bauteile gering. Da überdies der Befestigungsbolzen dauerhaft mit dem Hohlkörper verbunden ist, wird bei größeren, anzubringenden Gegenständen, in die der Befestigungsbolzen direkt eingeschraubt wird, die Möglichkeit eines unerwünschten oder unbefugten Lösens derselben vermieden

In einer alternativen Ausführungsform ist der Befestigungsabschnitt als im wesentlichen zylindrischer Zapfen mit einem Innengewinde ausgebildet. Für die Befestigung des Gegenstandes werden dann weitere Befestigungsmittel, beispielsweise Schrauben benötigt. Jedoch kann in diesem Fall der anzubringenden Gegenstand später auch einfach wieder gelöst werden, wobei die Anschlüsse auf Seiten des Hohlkörpers in ihrer ursprünglichen Lage erhalten bleiben.

Die Erfindung wird nachfolgend anhand von in der Zeichnung dargestellten Ausführungsbeispielen näher erläutert. Die Zeichnung zeigt in
- Figur 1: ein erstes Ausführungsbeispiel einer Befestigungsanordnung mit einem einstückigen Befestigungsbolzen,
- Figur 2: ein zweites Ausführungsbeispiel einer Befestigungsanordnung mit einem Befestigungsbolzen, der durch einen Schraubbolzen und eine Verlängerungshülse gebildet wird, und in
- Figur 3: ein drittes Ausführungsbeispiel, bei dem ein Befestigungsabschnitt des Befestigungsbolzens mit einem Innengewinde versehen ist.

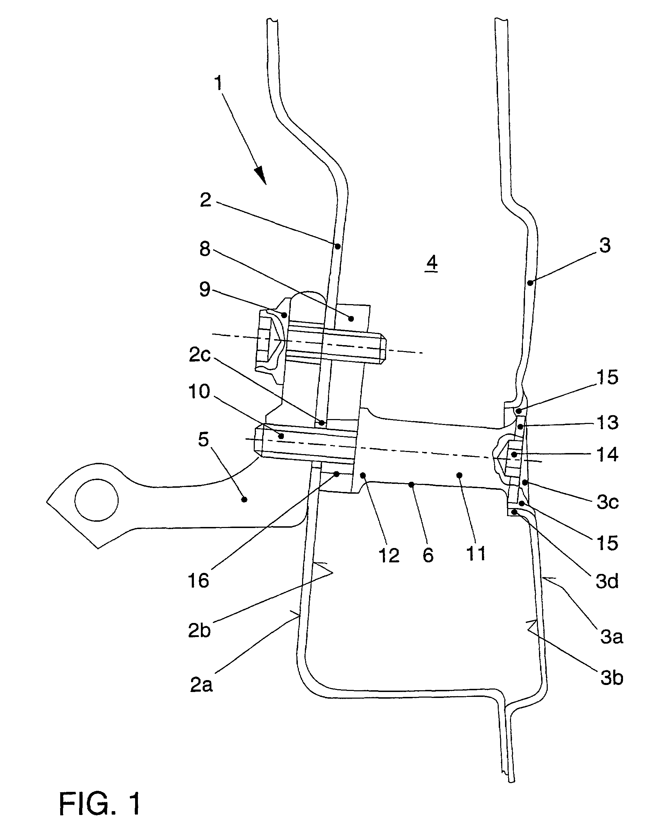

Das erste Ausführungsbeispiel zeigt in Figur 1 eine Befestigungsanordnung 1 mit einem aus zwei dünnwandigen Blechstücken 2 und 3 zusammengesetzten Hohlkörperabschnitt, an dessen Außenwand 2a ein Gegenstand 5 mittels eines in dem Hohlraum 4 des Hohlkörperabschnittes angeordneten Befestigungsbolzens 6 befestigt ist. Im folgenden wird die Befestigungsanordnung 1 beispielhaft im Zusammenhang mit einem Scharnier für eine Fahrzeugtür beschrieben. Dabei kann der Hohlkörperabschnitt sowohl auf der Seite der Tür als auch auf der Seite des Fahrzeugaufbaus liegen.

Wie aus Figur 1 weiter zu erkennen ist, sind die beiden Blechstücke 2 und 3 jeweils mit einer Öffnung 2c und 3c versehen, wobei die beiden Öffnungen 2c und 3c miteinander fluchten. Durch die Öffnungen 2c und 3c ist der Befestigungsbolzen 6 geführt. Die Offnung 3c auf der Seite des zu befestigenden Gegenstandes 5 weist einen kleineren Durchmesser auf, als die auf der gegenüberliegenden Seite angeordnete Öffnung 3c. Der Befestigungsbolzen 6 ist der auf der Seite der kleineren Öffnung 2c gegen die Innenwand 2b des Bleches 2 axial abgestützt, und weist einen durch diese Öffnungen nach außen ragenden Befestigungsabschnitt 10 zur Kopplung mit dem Gegenstand 5, hier einem Schamiersockel, auf. In dem ersten Ausführungsbeispiel, bei dem der Befestigungsbolzen 6 einstückig ausgebildet ist, ist der Befestigungsabschnitt 10 ein Gewindezapfen mit einem Außengewinde, das in ein entsprechendes Innengewinde an dem Gegenstand 5 eingeschraubt werden kann bzw. in einer nicht dargestellten Ausführungsvariante mit einer Mutter verschraubbar ist, um den Gegenstand 5 gegen die Außenwand 2a des Hohlkörpers zu verspannen.

Der Befestigungsbolzen 6 des ersten Ausführungsbeispiels weist weiterhin einen Bund 12 auf, der ein Durchschieben durch die Durchgangsöffnung 2c verhindert. In dem dargestellten Ausführungsbeispiel ist zur Verbreiterung der Einleitung der Spannkräfte in das Blech 2 zwischen dem Bund 12 und der Innenwand 2b des Bleches 2 eine Verstärkungsplatte 8 eingesetzt, die flächig gegen die Innenwand 2b anliegt und eine Durchgangsöffnung 16 zur Durchführung des Befestigungsabschnittes 10 des Befestigungsbolzens 6 aufweist. Die Verstärkungsplatte 8 kann über ein weiteres Befestigungselement 9, beispielsweise einen Schraubbolzen, das hier von außen durch den Gegenstand 5 gesteckt ist, an dem Blech 2 gesichert werden.

An den Bund 12 des Befestigungsbolzens 6 schließt sich in Richtung auf die weitere Öffnung 3c ein in seinem Durchmesser aus Gründen der Gewichtsersparnis verjüngter Distanzabschnitt 11 an, der im Bereich der weiteren Öffnung 3c in einen verbreiteten Kopfabschnitt 13 übergeht. Wie aus Figur 1 zu erkennen ist, liegt dieser Kopfabschnitt 13 innerhalb der weiteren Öffnung 3c, die als Einführöffnung 3c für den Befestigungsbolzen 6 ausgebildet ist, so daß dieser insgesamt von außen durch diese Öffnung 3c in den Hohlkörper eingeführt werden kann. Der im Bereich der Einführöffnung 3c dünnwandige Wandabschnitt ist in die Öffnung 3c hineingebogen, so daß ein verlängerter Innenrand 3d gebildet wird, der den Kopfabschnitt 13 des Befestigungsbolzens 6 radial umgibt, wodurch zwischen beiden ein Ringspalt besteht. Wie aus Figur 1 weiter zu erkennen ist, ist der Kopfabschnitt 13 im Bereich des Ringspaltes mit dem Innenrand 3d thermisch verbunden, beispielsweise durch Schweißen oder Löten. Damit ist der Befestigungsbolzen 6 dauerhaft an dem Hohlkörper bzw. an dem Blech 3 befestigt.

Zur Vermeidung von Nachbearbeitungen ist in die Länge des Befestigungsbolzens 6 auf den Hohlkörper derart abgestimmt, daß der Kopfabschnitt 13 nicht wesentlich aus der Einführöffnung 3c hervorragt. Die Montage des Befestigungsbolzens 6 wird durch eine an dem Kopfabschnitt 13 vorgesehene Innensechskantausnehmung 14 erleichtert.

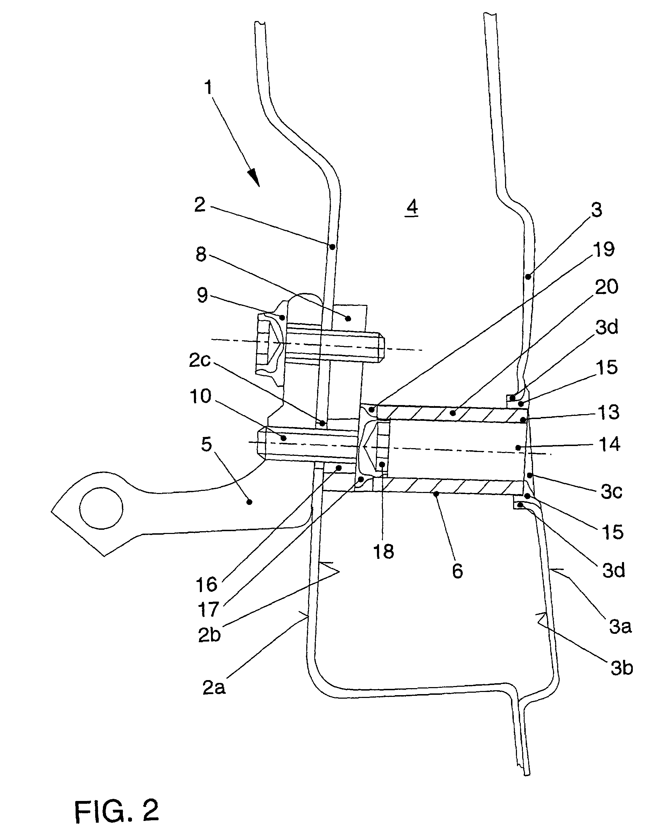

Das in Figur 2 dargestellte zweite Ausführungsbeispiel unterscheidet sich von dem ersten Ausführungsbeispiel lediglich durch die Ausgestaltung des Befestigungsbolzens 6, der im Fall des zweiten Ausführungsbeispiels aus zwei Stücken zusammengesetzt ist.

Der Befestigungsbolzen des zweiten Ausführungsbeispiels umfaßt zunächst einen Schraubbolzen 17 mit einem verbreiteten Kopfabschnitt, an den in Richtung des zu befestigenden Gegenstandes 5 ein Befestigungsabschnitt 10 in Form eines Gewindezapfens mit einem Außengewinde anschließt. Der verbreiterte Kopfabschnitt ist axial gegen die Innenwand 2b des Bleches in Richtung des Gegenstandes 5 abgestützt, wobei wie in dem ersten Ausführungsbeispiel zwischen dem verbreiterten Kopfabschnitt und der Innenwand 2b wiederum eine Verstärkungsplatte 8 mit einer Durchgangsöffnung 16 angeordnet ist. Im Unterschied zu dem ersten Ausführungsbeispiel reicht der Kopfabschnitt des Schraubbolzens 17 jedoch nicht bis in die Einführöffnung 3c, sondern endet im Prinzip unmittelbar hinter der Verstärkungsplatte 8 innerhalb des Hohlraumes 4. Dafür kann für den Schraubbolzen 17 ein herkömmliches Normteil verwendet werden, das zur Erleichterung der Montage wiederum eine Innensechskantausnehmung 18 an seinem Kopfabschnitt aufweist.

Zur weiteren hohlkörperseitigen Abstützung des Befestigungsbolzens 6 nach dem zweiten Ausführungsbeispiel ist an den Schraubbolzen 17 eine Verlängerungshülse 20 angesetzt und mit diesem verbunden. Hierzu ist die Verlängerungshülse 20, die als Hohlrohrabschnitt ausgebildet ist, an den Kopfabschnitt des Schraubbolzens 17 angeschweißt, wobei die Innensechskantausnehmung 18 an dem Kopfabschnitt durch die Verlängerungshülse 20 hindurch für ein Werkzeug zugänglich bleibt.

Aus Figur 2 ist weiter zu erkennen, daß sich die Verlängerungshülse 20 bis in die Einführöffnung 3c erstreckt, wo diese mit einem Außenumfangsabschnitt zu dem Innenrand 3d der Einführöffnung 3c wiederum ein Ringspalt bildet, über den eine Schweiß- bzw. Lötverbindung 15 zu dem Blech 3 bzw. dem Hohlkörper erfolgt. Die Länge der Verlängerungshülse 20 ist dabei derart gewählt, daß deren von dem Kopfabschnitt abgewandtes Ende nicht oder nicht wesentlich aus der Einführöffnung 3c hervorragt. Durch die Verwendung der Verlängerungshülse 20, die vor dem Einsetzen des Befestigungsbolzens 6 in den Hohlkörper an dem Schraubbolzen 17 angebracht wird, ist es möglich, die Länge desselben einfach an die Einbaubedingungen anzupassen. Überdies wird die Fertigung eines komplizierten Bauteils vermieden, da der Befestigungsbolzen 6 nach dem zweiten Ausführungsbeispiel durch ein Normteil sowie einen konstruktiv einfachen Rohrabschnitt gebildet wird. Die Verwendung der Verlängerungshülse 20 ermöglicht überdies die Optimierung der Schweißverbindungen 15 und 19 durch eine gezielte Auswahl des Materials für die Verlängerungshülse 20, was insbesondere dann vorteilhaft ist, wenn sich ein Normschraubbolzen nicht ohne weiteres an das Blech 3 des Hohlkörpers anschweißen läßt.

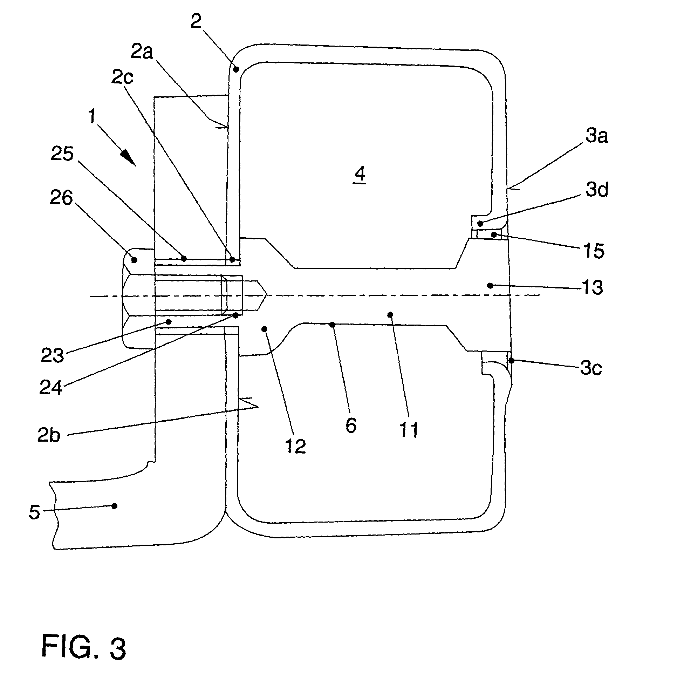

Ein weiteres Ausführungsbeispiel ist in Figur 3 dargestellt, bei dem der Hohlkörper durch ein Profilstück 2 mit im Querschnitt geschlossener Außenkontur gebildet wird. An dessen Außenwand 2a wird wiederum ein Gegenstand 5 mittels eines von der anderen Seite durch den Hohlkörper eingesteckten Befestigungsbolzen 6 befestigt. Dazu sind wie in den beiden zuvor genannten Ausführungsbeispielen wiederum zwei miteinander fluchtende Öffnungen 2c und 3c vorgesehen, die in ihren Durchmesserverhältnissen derart auf einander abgestimmt sind, daß der Befestigungsbolzen 6 auf der von dem Gegenstand 5 abgewandten Seite in den Hohlkörper eingeführt und auf der Seite des Gegenstandes 5 mit einem Befestigungsabschnitt 23 durch die Öffnung 2c zur Verbindung mit dem Gegenstand 5 nach außen geführt werden kann. Der innerhalb des Hohlraumes 4 des Hohlkörpers verlaufende Abschnitt des Befestigungsbolzens 6 ist dabei wie in dem ersten Ausführungsbeispiel ausgebildet und weist einen breiteren Bund 12 auf, der hier unmittelbar gegen die Innenwand 2b um die kleinere Öffnung 2c axial abgestützt ist. An den Bund schließt wieder ein verjüngter Abschnitt als Distanzabschnitt 11 sowie ein verbreiterter Kopfabschnitt 13 an, der in der Einführöffnung 3c an einen Innenrand 3d angeschweißt oder angelötet ist. Aus Figur 3 ist zu erkennen, daß der Befestigungsbolzen 6 bzw. dessen Kopfabschnitt 13 im eingesteckten Zustand mit einem Außenwandabschnitt 3a des Hohlkörpers um die Einführöffnung 3c bündig abschließt.

Im Unterschied zu den zuvor beschriebenen Ausführungsbeispielen ist in der Befestigungsabschnitt 23 als zylindrischer Zapfen ausgebildet, der durch eine an dem Gegenstand 5 vorgesehene Durchgangsöffnung 25 hindurch gestreckt werden kann. Der zylindrische Zapfen weist ein Innengewinde 23 auf, in das ein Befestigungsbolzen 26 zur Verspannung des Gegenstandes 5 mit der Außenwand 2b bzw. dem Hohlkörper eingeschraubt werden kann.

Das Verfahren zur Montage der Befestigungsanordnung läuft bei einer Verwendung für ein Fahrzeugtürschamier in allen drei Ausführungsbeispielen gleichartig ab. Zunächst wird der Hohlkörper, d.h. die A-Säule oder B-Säule einer Fahrzeugkarosserie in einer Fertigungsstraße zusammengefügt, beispielsweise zusammengeschweißt. Hiernach wird, weiterhin in der Fertigungsstraße, die Fahrzeugtür mit einem Scharniersockel 5 angesetzt und mit einem Befestigungsbolzen 6 gegen die Karosserie verschraubt. Anschließend wird der Befestigungsbolzen 6 an seinem dem Gegenstand 5 gegenüberliegenden Ende mit der Karosserie dauerhaft verbunden, vorzugsweise verschweißt, wozu die im Bereich der Fertigungsstraße vorhandenen Fertigungsmittel eingesetzt werden.

Damit ergibt sich eine verbesserte Befestigungsanordnung mit hohen Festigkeitseigenschaften, insbesondere einer hohen Ausreißsicherheit im Crashfall, die ohne fertigungstechnischen Mehraufwand in der Fertigungsstraße montiert werden kann.

### BEZUGSZEICHENLISTE

- 1: Befestigungsanordnung
- 2: Blechstück
- 2a: Außenwand
- 2b: Innenwand
- 2c: kleine Öffnung
- 3: Blechstück
- 3a: Außenwand
- 3b: Innenwand
- 3c: Einführöffnung
- 3d: Innenrand
- 4: Hohlraum
- 5: Gegenstand
- 6: Befestigungsbolzen
- 7: Schnittpunkt der Lenkerwirklinien
- 8: Verstärkungsplatte
- 9: Befestigungselement
- 10: Befestigungsabschnitt des Befestigungsbolzens
- 11: Distanzabschnitt
- 12: Bund
- 13: Kopfabschnitt
- 14: Innensechskantausnehmung
- 15: Schweißverbindung
- 16: Durchgangsöffnung der Verstärkungsplatte
- 17: Schraubbolzen
- 18: Innensechskantausnehmung
- 19: Schweißverbindung
- 20: Verlängerungshülse
- 23: Befestigungsabschnitt
- 24: Innengewinde
- 25: Durchgangsöffnung
- 26: Befestigungsbolzen

## Patentansprüche

1. Anordnung zur Befestigung eines Gegenstandes (5) an der Außenwand (2a) eines Hohlkörpers, umfassend einen Hohlkörperabschnitt mit zwei einander gegenüberliegenden Wänden, die mit zueinander orientierten Öffnungen (2c, 3c) versehen sind, und einen Befestigungsbolzen (6), der auf der Seite der einen Öffnung (2c) hohlkörperinnenseitig axial gegen die Innenwand (2b) abgestützt ist und einen durch diese Öffnung (2c) nach außen ragenden Befestigungsabschnitt (10; 23) zur Kopplung mit dem Gegenstand (5) aufweist, und der an der anderen Öffnung (3c), die als Einführöffnung für den Befestigungsbolzen (6) ausgebildet ist, dauerhaft mit dem Hohlkörper verbunden ist.

2. Befestigungsanordnung nach Anspruch 1, **dadurch gekennzeichnet, daß** der Befestigungsbolzen (6) an dem Hohlkörper auf der Seite der Einführöffnung (3c) angeschweißt ist.

3. Befestigungsanordnung nach Anspruch 1, **dadurch gekennzeichnet, daß** der Befestigungsbolzen (6) an dem Hohlkörper auf der Seite der Einführöffnung (3c) angelötet ist.

4. Befestigungsanordnung nach einem der Ansprüche 1 bis 3, **dadurch gekennzeichnet, daß** der Befestigungsbolzen (6) im eingesteckten Zustand mit einem Außenwandabschnitt des Hohlkörpers um die Einführöffnung (3c) bündig abschließt.

5. Befestigungsanordnung nach einem der Ansprüche 1 bis 4, **dadurch gekennzeichnet, daß** ein die Einführöffnung (3c) umgebender Rand (3d) des Hohlkörperabschnittes nach innen umgebogen ist, derart, daß zwischen dem Rand (3d) und dem Außenumfang des Befestigungsbolzens (6) ein Ringspalt gebildet wird, und daß die dauerhafte Verbindung zwischen dem Befestigungsbolzen (6) und dem Hohlkörper im wesentlichen zwischen einer Innenumfangsfläche des umgebogenen Randes (3d) und einer Außenumfangsfläche des Befestigungsbolzens (6) vorgenommen ist.

6. Befestigungsanordnung nach einem der Ansprüche 1 bis 5, **dadurch gekennzeichnet, daß** der Befestigungsbolzen (6) einstückig ausgebildet ist.

7. Befestigungsanordnung nach einem der Ansprüche 1 bis 5, **dadurch gekennzeichnet, daß** der Befestigungsbolzen (6) durch einen Schraubbolzen (17) und einen an dessen Kopf befestigte Verlängerungshülse (20) gebildet ist.

8. Befestigungsanordnung nach einem der Ansprüche 1 bis 7, **dadurch gekennzeichnet, daß** die Axialabstützung des Befestigungsbolzens (6) gegen einen Innenwandabschnitt des Hohlkörpers auf der Seite der Befestigung des Gegenstandes (5) über eine Verstärkungsplatte (8) erfolgt, die gegen den Innenwandabschnitt (2b) flächig anliegt und mit einer Durchgangsöffnung (16) für den Befestigungsabschnitt (10) des Befestigungsbolzens (6) versehen ist.

9. Befestigungsanordnung nach einem der Ansprüche 1 bis 8, **dadurch gekennzeichnet, daß** der Befestigungsabschnitt (10) als Gewindebolzen mit einem Außengewinde ausgebildet ist.

10. Befestigungsanordnung nach einem der Ansprüche 1 bis 8, **dadurch gekennzeichnet, daß** der Befestigungsabschnitt (23) als im wesentlichen zylindrischer Zapfen mit einem Innengewinde ausgebildet ist.

## Claims

1. Arrangement for fastening an object (5) to the outer wall (2a) of a hollow body, comprising a hollow-body section with two mutually opposite walls which are provided with openings (2c, 3c) oriented towards each other, and a fastening bolt (6), which is supported axially against the inner wall (2b) on the inside of the hollow body, on the side with the one opening (2c), and has a fastening section (10; 23) which protrudes outwards through this opening (2c) and is used for coupling to the object (5), and which is connected permanently to the hollow body at the other opening (3c), which is designed as an introductory opening for the fastening bolt (6).

2. Fastening arrangement according to Claim 1, **characterized in that** the fastening bolt (6) is welded to the hollow body on the side of the introductory opening (3c).

3. Fastening arrangement according to Claim 1, **characterized in that** the fastening bolt (6) is soldered to the hollow body on the side of the introductory opening (3c).

4. Fastening arrangement according to one of Claims 1 to 3, **characterized in that** the fastening bolt (6), when inserted, ends flush around the introductory opening (3c) with an outer wall section of the hollow body.

5. Fastening arrangement according to one of Claims 1 to 4, **characterized in that** an edge (3d) of the hollow-body section that surrounds the introductory opening (3c) is bent over inwards in such a manner that an annular gap is formed between the edge (3d) and the outer circumference of the fastening bolt (6), and **in that** the permanent connection between the fastening bolt (6) and the hollow body is essentially brought about between an inner circumferential surface of the bent-over edge (3d) and an outer circumferential surface of the fastening bolt (6).

6. Fastening arrangement according to one of Claims 1 to 5, **characterized in that** the fastening bolt (6) is of one-piece design.

7. Fastening arrangement according to one of Claims 1 to 5, **characterized in that** the fastening bolt (6) is formed by a screw bolt (17) and an extension sleeve (20) which is fastened to its head.

8. Fastening arrangement according to one of Claims 1 to 7, **characterized in that** the axial support of the fastening bolt (6) against an inner wall section of the hollow body on the side on which the object (5) is fastened takes place via a reinforcing plate (8) which bears flat against the inner wall section (2b) and is provided with a passage opening (16) for the fastening section (10) of the fastening bolt (6).

9. Fastening arrangement according to one of Claims 1 to 8, **characterized in that** the fastening section (10) is designed as a threaded bolt with an external thread.

10. Fastening arrangement according to one of Claims 1 to 8, **characterized in that** the fastening section (23) is designed as an essentially cylindrical pin with an internal thread.

## Revendications

1. Dispositif combiné pour la fixation d'un objet (5) sur la paroi externe (2a) d'un corps creux, comportant une section formant corps creux avec deux parois opposées l'une à l'autre, qui sont munies d'ouvertures (2c, 3c) orientées l'une vers l'autre, ainsi qu'un boulon de fixation (6), qui du côté de l'une des ouvertures (2c) est axialement en appui à l'intérieur du corps creux contre la paroi interne (2b) et qui présente une section de fixation (10; 23), faisant saillie à travers cette ouverture (2c) vers l'extérieur et destinée à l'accouplement avec l'objet (5), et qui est, vers l'autre ouverture (3c) conformée comme ouverture d'introduction pour le boulon de fixation (6), solidarisé durablement avec le corps creux.

2. Dispositif combiné de fixation selon la revendication 1, **caractérisé en ce que** le boulon de fixation (6) est soudé au corps creux du côté de l'ouverture d'introduction (3c).

3. Dispositif combiné de fixation selon la revendication 1, **caractérisé en ce que** le boulon de fixation (6) est brasé au corps creux du côté de l'ouverture d'introduction (3c).

4. Dispositif combiné de fixation selon l'une des revendications 1 à 3, **caractérisé en ce que** le boulon de fixation (6), en position enfoncée, se termine de façon plane par une section de paroi externe du corps creux, autour de l'ouverture d'introduction (3c).

5. Dispositif combiné de fixation selon l'une des revendications 1 à 4, **caractérisé en ce qu'**un bord (3d) de la section du corps creux, entourant l'ouverture d'introduction (3c), est recourbé vers l'intérieur, de telle sorte qu'entre le bord (3d) et la périphérie externe du boulon de fixation (6) soit formée une fente annulaire, et **en ce que** la liaison durable entre le boulon de fixation (6) et le corps creux est essentiellement réalisée entre une surface périphérique interne du bord recourbé (3d) et une surface périphérique externe du boulon de fixation (6).

6. Dispositif combiné de fixation selon l'une des revendications 1 à 5, **caractérisé en ce que** le boulon de fixation (6) est monobloc.

7. Dispositif combiné de fixation selon l'une des revendications 1 à 5, **caractérisé en ce que** le boulon de fixation (6) est constitué d'un boulon fileté (17) et d'une douille de prolongement (20) fixée à la tête dudit boulon.

8. Dispositif combiné de fixation selon l'une des revendications 1 à 7, **caractérisé en ce que** l'appui axial du boulon de fixation (6), contre une section de paroi interne du corps creux, du côté de la fixation de l'objet (5), est assuré par l'intermédiaire d'une plaque de renforcement (8), qui repose de façon plane contre la section de paroi interne (2b) et est pourvue d'une ouverture de passage (16) pour la section de fixation (10) du boulon de fixation (6).

9. Dispositif combiné de fixation selon l'une des revendications 1 à 8, **caractérisé en ce que** la section de fixation (10) est conformée comme un boulon fileté avec filetage extérieur.

10. Dispositif combiné de fixation selon l'une des revendications 1 à 8, **caractérisé en ce que** la section de fixation (23) est essentiellement un tenon cylindrique avec un filetage intérieur.
